# EUROPÄISCHE PATENTANMELDUNG

(11) **EP 1 355 208 A1**
(43) Veröffentlichungstag der Anmeldung: **22.10.2003**
(21) Anmeldenummer: 02008464.6
(22) Anmeldetag: 15.04.2002
(51) Int. Cl.: G05B 19/042

(54) **System zur Automatisierung technischer Prozesse**

(71) Anmelder: Renner, Peter, 51515 Kürten (DE)
(72) Erfinder: Renner, Peter, 51515 Kürten (DE)
(74) Vertreter: Nau, Walter, Dipl.-Ing.

(57) **Zusammenfassung**

System zur Automatisierung technischer Prozesse und/oder Versuche, bei dem vorgesehen sind, eine Mess- und eine Steuereinheit (49), die mittels Mess- und Steuerkanälen (51) mit Sensoren und Aktoren des Prozesses oder der Versuchseinheit (48) in Verbindung stehen, zumindest eine Bibliothek, die Visualisierungsobjekte und Steuermodule enthält, und das System beherrschende Software.

Das System ermöglicht es, dem Anwender ohne Kenntnisse von Programmiertechniken Anwendungen zu entwickeln. Technologen, Chemiker, Wissenschaftler sind nicht mehr auf die Hilfe von Spezialisten angewiesen.

## Beschreibung

**Die Erfindung bezieht sich** auf ein System zur Automatisierung technischer Prozesse gemäß dem Oberbegriff des Patentanspruchs 1.

Es gibt eine Gruppe von Produkten auf dem Markt, die unter dem Begriff Leitsysteme bekannt sind. Damit werden oft umfangreiche industrielle Anlagen gesteuert und bedient. Solche Systeme arbeiten zweigleisig. Für die Steuraufgaben nutzen Sie eine Automatisierungs Software, die als SPS-Software und PLC- Programmingsystem bekannt sind. Für die Bedienerführung wird eine von der Steuer Software unabhängige Visualisierungs-Software eingesetzt. Steuersoftware und Visualisierung laufen in unterschiedlichen Geräten, die Steuersoftware in SPS- bzw Prozess Steuergeräten in einer Prozessebene, die Visualisierungs-Software in der Leitebene. Daraus geht schon hervor, dass die Automatisierung als Ganzes keine in sich geschlossene Einheit ist. Es ist nicht möglich, eine solche Automatisierung ohne Hilfe von Spezialisten einzurichten. Der Aufwand ist beträchtlich.

Ende der 80er Jahre, als die PCs einen Grad der Leistungsfähigkeit erreicht hatten und die graphischen Fähigkeiten entwickelt wurden, sind sogenannte virtuelle Messgeräte aufgekommen. Bis dato kannte man Messgeräte mit Knöpfen, Tasten, Schaltern und Anzeigeinstrumenten. Mess-Schaltungen wurden körperlich aus Draht und Filtern u.ä. aufgebaut.
Dies wurde nun durch virtuelle Messgeräte und Mess-Schaltungen ersetzt. Nun hatte man Abbildungen solcher Geräte auf dem Bildschirm. Das Drehen an Knöpfen, das Betätigen von Tasten und Schaltern wurde durch Mausklicks ersetzt. Eine Automatisierung war damit noch nicht verbunden. Um diesen Misstand zu beseitigen, wurde eine Programmiersprache darüber gestülpt. Nach der Meinung einer Vielzahl von Anwendern ist die Einrichtung einer Automatisierung auf der Basis solcher Softwärelösungen sehr kompliziert und erfordert eine lange Einarbeitungszeit. Ein Anwender benötigt Spezialkenntnisse, die er sich aneignen muss. Der Aufwand ist beträchtlich. Bei diesen Lösungen ist es nicht gelungen eine Konsistenz zwischen Bedienen und Beobachten und der Automatisierung herzustellen. Gerade in der Laborautomatisierung wäre es sehr vorteilhaft, wenn man einfache Lösungen hätte, die es ermöglichen, schnell und ohne grossen Aufwand Automatisierungsaufgaben zu entwickeln, ohne dass Spezialkenntnisse bzw. der Einsatz von Spezialisten erforderlich sind.

**Der Erfindung liegt die Aufgabe zugrunde**, diese Mängel zu beseitigen. Es soll eine geschlossene Einheit bzw. ein System zur Verfügung gestellt werden, das es dem Anwender ermöglicht, ohne den Syntax einer Programmiersprache zu erlernen, Prozesse ablaufen zu lassen oder Versuche durchzuführen. Ein Anwender soll sich ganz auf seine Versuchs- und/oder Prozessaufgaben konzentrieren können.

Gelöst wird die Aufgabe der Erfindung durch eine Mess- und Steuereinheit, die mittels Mess- und Steuerleitungen mit Sensoren und Aktoren des Prozesses oder der Versuchseinheit in Verbindung stehen, durch zumindest eine Bibliothek, die Visualisierungsobjekte und Steuermodule enthält und durch das System beherrschende Software.

Dadurch werden die Vorgänge, die mühsam manuell vorgenommen werden, durch das erfindungsgemäße System selbsttätig erledigt.

Die Mess- und Steuereinheit stellt die Verbindung zu der Versuchseinrichtung oder dem Prozess, der automatisiert werden soll, her. Diese Verbindung zum Prozess beruht auf Messkanälen und Steuerkanälen, die mit den Sensoren und Aktoren des Prozesses verbunden sind. Manchmal ist es auch erforderlich, dass die Mess- und Steuereinheit über Schnittstellen verfügen muss, über die andere Geräte in das Automatisierungsgeschehen einbezogen werden. Solche Geräte können z.B. Waagen sein, deren Messwerte via Schnittstelle dem Automatisierungssystem zugeführt werden.

Die Software ermöglicht es, via Messteil der Mess- und Steuereinheit (49) den Stand des Versuches abzufragen, daraus die nötigen Schlüsse zu ziehen und via Steuerteil den Ablauf des Versuches in die vom Anwender gewünschte Form zu bringen.

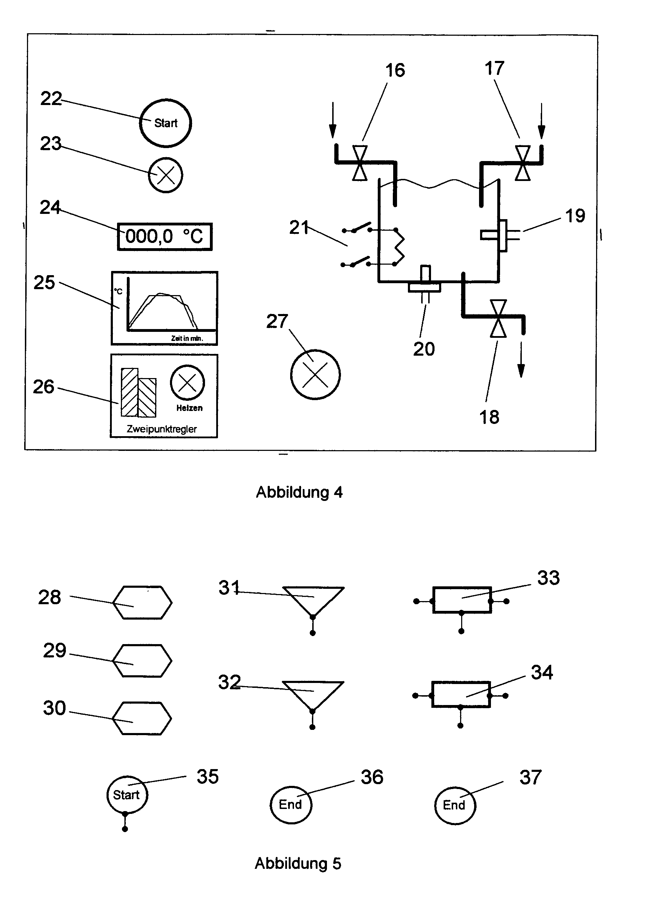

Durch die Software werden weiterhin dem Anwender Methoden an die Hand gegeben, den Versuch während der Laufzeit zu beobachten und zu bedienen. Dies geschieht über graphische Bildschirme (Prozess-Schaubilder) (Abbildung 4), die virtuelle Tasten, Anzeigegeräte, Trenddarstellungen und anderes enthalten. Oft findet man im Hintergrund eine Zeichnung oder Foto, das ein Abbild des Prozesses darstellt. Eine solche Software kann als Visualisierungs-Software bezeichnet werden.

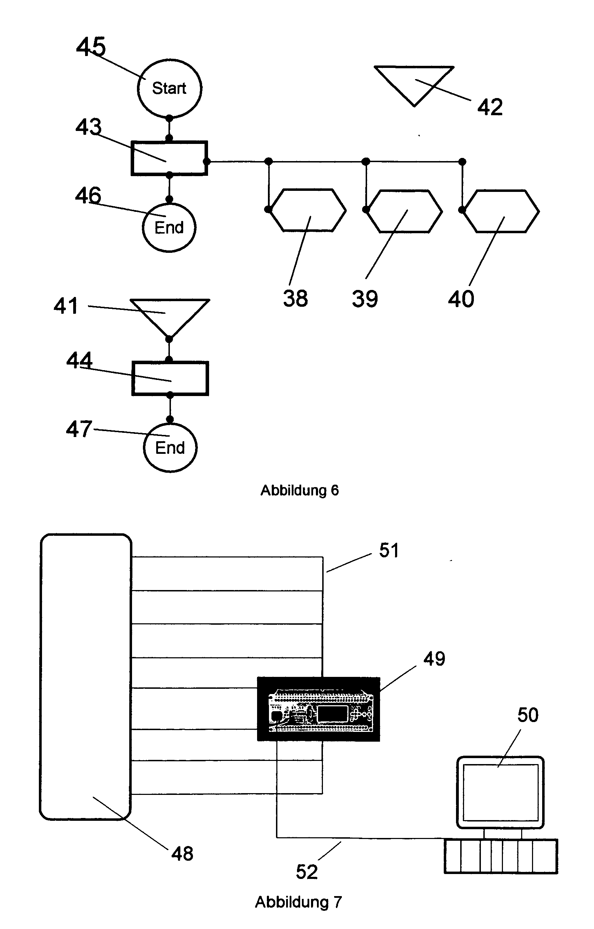

Erfindungsgemäß steht weiterhin eine Bibliothek für Visualisierungsobjekte und eine Bibliothek für Steuermodule zur Verfügung. Die Funktion der Visualisierungsobjekte und Steuermodule (Abbildung 6) wird durch die Ausführungsbeispiele deutlich. Die Visualisierungsobjekte sind die Schnittstelle zum Bediener. Es handelt sich um graphische Objekte, die Bedienelemente wie Tasten, Schalter, Eingabefelder umfassen. Diese können auf der Bildoberfläche angeordnet, in ihrer Grösse verändert werden und mit speziellen Eigenschaften versehen werden, ohne dass hierfür eine Programmierung erforderlich wäre.
Die Steuermodule sind dazu ausgelegt, den Ablauf einer Anwendung zu steuern und dadurch zu automatisieren.
Es ist vorgesehen, dass ein Anwender zuerst aus der Bibliothek für Visualisierungsobjekte diejenigen auswählt, die er für seine Automatisierungsaufgabe benötigt. Er wird sie auf dem Bildschirm in Schaubildern (Abbildung 4) anordnen, eine erwünschte Grösse geben, Farben, Beschriftungen und ähnliches auswählen. Damit hat er seine Bedieneroberfläche optisch eingerichtet.
Dem Anwender werden also Schritt für Schritt Wahlmöglichkeiten an die Hand gegeben, bis die Automatisierungsaufgabe endgültig entwickelt ist.

Erfindungsgemäss sind Visualisierungsobjekte mit in ihrer Funktion vordefinierten Steuermodulen verknüpft. Beide zusammen tragen zur Lösung von Teilaufgaben der Automatisierung bei. Wenn ein Visualisierungsobjekt ausgewählt wurde, so wird gleichzeitig ohne zutun des Anwenders der verknüpfte Steuermodul in einem Modulfenster angelegt.

In weiterer Ausbildung der Erfindung ist es vorgesehen, dass im Programmcode der Steuermodule Anweisungen vorgesehen sind, die direkt die Eigenschaften von Visualisierungsobjekten verändern. Textinformationen in Textausgabefeldern schreiben u.ä. Bedienhandlungen werden durch Abfrage von Eigenschaften z. B. einer virtuellen Taste direkt in den Automatisierungsprozess einbezogen.

Erfindungsgemäss kann ein Anwender aus der Kenntnis seines Versuches heraus weitere Module aus der Bibliothek der Steuermodule auswählen. Die zuvor automatisch angelegten Steuermodule umfassen nämlich nicht alle erforderlichen Funktionen zur Lösung der Automatisierungsaufgabe. Mit der Wahl der weiteren Steuermodule bis wird das Gerüst der Automatisierungsaufgabe vervollständigt.

Ein zentraler Erfindungsgedanke zur Lösung der Gesamtaufgabe besteht darin, die Steuermodule den Kategorien Abläufe, Ereignisse und Funktionen zuzuordnen, woraus drei Typen von Steuermodulen abgeleitet werden. Dies sind die Typen Ablaufmodul, Ereignismodul und Funktionsmodul.
Der Typ Ablaufmodul ist, wie sein Name aussagt, für die zeitliche Aneinanderreihung der verschiedenen Aktivitäten verantwortlich. Er übernimmt die Prozessführung. Diese Aktivitäten werden durch den Zustand des automatisierenden Prozesses und durch Bedienerhandlungen beeinflusst. Z.B. muss das Erreichen einer Temperatur abgewartet werden, bis weitere Aktionen ablaufen können.
Der Prozess kann an einer bestimmten Stelle warten bis eine Bedienerhandlung erfolgt ist.
Der Typ Ereignismodul bearbeitet Vorgänge, die für den Prozessablauf meist unerwartet sind und zu einem beliebigen Zeitpunkt eintreten können. Ereignismodule werden durch Interrupts aufgerufen. Sobald das Ereignis eintritt, werden Aktivitäten ausgelöst, die den Ablauf unterbrechen. Nach Abarbeitung der Aktivitäten des Ereignisses wird der normale Ablauf fortgesetzt, es sei denn das Ereignis hat einen Shutdown (Sicherheitsabschaltung) zur Folge, der das Programm beendet. Ereignismodule werden jedoch nie durch andere Module aufgerufen. Ereignisse können Abläufe beinhalten, die den ursprünglichen Ablauf unterbrechen, aber nie ablösen. Ereignismodule sind fast immer mit Visualisierungsobjekten verknüpft.
Der Typ Funktionsmodul beinhaltet Spezialfunktionen z.B. Regler, Messung, zeitabhängig gesteuerte Sollwerte und ähnliches. Kennzeichen der Funktionsmodule ist, dass sie zur gleichen Zeit arbeiten wie Ablaufmodule. Funktionsmodule arbeiten also parallel zu Abläufen. Die Prozessführung wird von Funktionsmodulen nicht übernommen. Funktionsmodule können durch Ereignisse unterbrochen werden. Funktionsmodule können durch Abläufe und Ereignisse aufgerufen und beendet werden. Funktionsmodule können immer mit Visualisierungsobjekten verknüpft werden. Dadurch kann ein Beobachter z.B. die korrekte Funktion eines Reglers beobachten. Er kann in einer Trendgraphik Kurvenverläufe analysieren.
Es ist einzusehen, dass diese Typisierung die Entwicklung der Automatisierungsaufgabe bedeutend erleichtert, zumal mit der Wahl der Visualisierungsobjekte die Ereignismodule und die Funktionsmodule automatisch im Modulfenster plaziert werden. Der Anwender braucht sich nur noch um die Wahl der Ablaufmodule zu kümmern, wenn man Programmanfang und Programmende als Selbstverständlichkeit unberücksichtigt lässt.

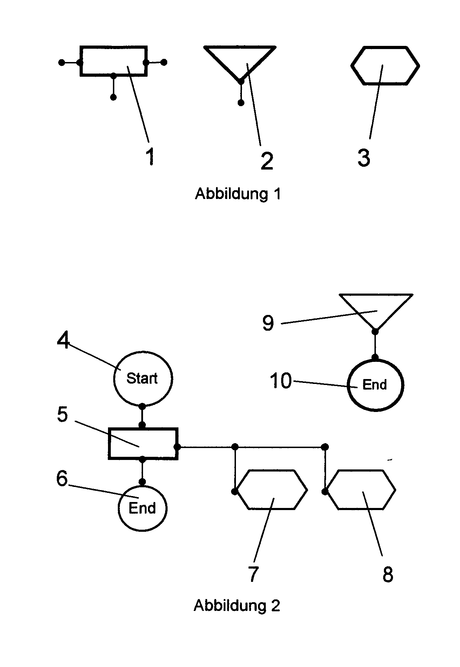

In weiterer Ausbildung der Erfindung ist es vorgesehen, den verschiedenen Typen der Steuermodule (Ablauf-, Ereignis- und Funktionsmodule) je eine symbolische Figur zuzuordnen. Diese symbolischen Figuren sollen sich deutlich voneinander unterscheiden. Sie machen es dem Anwender leicht, in Verbindung mit der Verkettung, die weiter hinten beschrieben ist, die Struktur seiner Automatisierungsaufgabe zu erkennen.Wenn der Anwender einen Modul aus der Bibliothek in das Modulfenster zieht, so wird sich der Modul als symbolische Figur auf der Bildschirmoberfläche der Modulfenster manifestieren. Andere Module werden, wie vorher beschrieben, automatisch angelegt, wenn das korrespondierende Visualisierungsobjekt angelegt wird. Der Anwender kann die Figuren auf dem Bildschirm so anordnen, wie er den Ablauf gestalten möchte. (Abbildungen 2 und 6)

Ein weiteres Erfindungsmerkmal sieht vor, dass die Module graphisch durch Linien miteinander verbunden (verkettet) werden. Eine solche Verkettung ist in Abbildung 2 und 6 dargestellt und beschrieben. Ein Anwender wird die einzelnen Module so miteinander verbinden, wie es dem Programmablauf entspricht.

Dieses Verketten muss erfindungsgemäß nach festen Regeln geschehen. Diese Regeln besagen, dass Ablaufmodule und Ereignismodule, immer senkrecht zu verketten sind. Dagegen werden Funktionsmodule horizontal verkettet.
Die senkrecht verketteten Module sind für die Prozessführung verantwortlich. Die horizontal verketteten Module arbeiten immer parallel zu vertikal verketteten Modulen. Zweckmässigerweise wird ein Anwender die Module so von oben nach unten anordnen, wie es dem Programmverlauf entspricht. Ein weitere Regel besagt, dass Ereignismodule nie durch andere Module aufgerufen werden können. Ihr Aufruf erfolgt wie zuvor erwähnt durch zyklische Interrupts.
Bei diesen einfachen Regeln, bei nur drei unterschiedlichen Figuren (1 bis 3), ist die Struktur der Automatisierungsanwendung auf einen Blick zu erkennen.
Abbildung 2 und 6 zeigt wie übersichtlich die Anordnung mit geometrischen Figuren ist.
Ein grosser Teil der Entwicklungsarbeit ist bereits erledigt, ohne dass es hierzu Spezialkennthisse bedurfte. Der Anwender kann sich voll auf seinen Prozess, den er automatisieren möchte konzentrieren. In der weiteren Enwicklungsarbeit ist es nun erforderlich den Modulen, die für die spezifische Automatisierungsaufgabe benötigten Eigenschaften zu geben.

In der weiteren Ausbildung der Erfindung öffnet sich dem Anwender durch Markieren der symbolischen Figur eines Steuermoduls im Modulfenster und z.B. durch einen Doppelklick auf die markierte Figur der Bildschirm Modulkonfiguration.
Er wird dort, vom Modultyp abhängig ein Programmskelett oder Eingäbedialoge (ähnlich Formularen) vorfinden. Bei Modulen, die Standardaufgaben erledigen wie Regler, wird er Eingabedialoge, die es ihm ermöglichen dem Modul zu parametrisieren, vorfinden. Bei anderen Modulen wie Abläufen und Ereignissen wird er ein Programmskelett vorfinden.

Obwohl es sich bei diesem Code um eine Scriptsprache handelt, hat es der Anwender nicht nötig, die Sprache zu erlernen. Hierzu dienen weitere Erfindungsgedanken. In den Programmskeletten findet er besonders hervorgehobene Schlüsselworte z.B. durch Unterstreichung. Seine Aufgabe besteht nun darin, diese Schlüsselworte durch weitere Schlüsselworte, Programmcode, Variable und Konstanten zu ersetzen. Dies geschieht dadurch, dass er das Schlüsselwort anklickt. Es öffnet sich dann eine Wissensliste. Aus dieser Wissensliste wählt er einen Listenpurikt aus, der das Schlüsselwort ersetzt. Wie dies praktisch gehandhabt wird, ist in einem Ausführungsbeispiel beschrieben.
Der Modul ist dann fertig konfiguriert, wenn alle unterstrichenen Schlüsselworte durch Programmcode, Variable und Konstanten ersetzt worden sind.
Das Beispiel eines Ereignismoduls das ein Ziffernanzeigeinstrument steuert, mit dem individuellen Namen "TempAnzeiger", soll dies verdeutlichen:
Das Ziffernanzeigegerät soll die Aufgabe bekommen, den Wert des Analogkanales mit dem Namen "TempSensor" laufend anzuzeigen.
Der Anwender muss lediglich die Variable "TempSensor" aus der Wissensliste "Analogkanäle" auswählen. Im Konfigurationsfenster erscheint folgender Code:

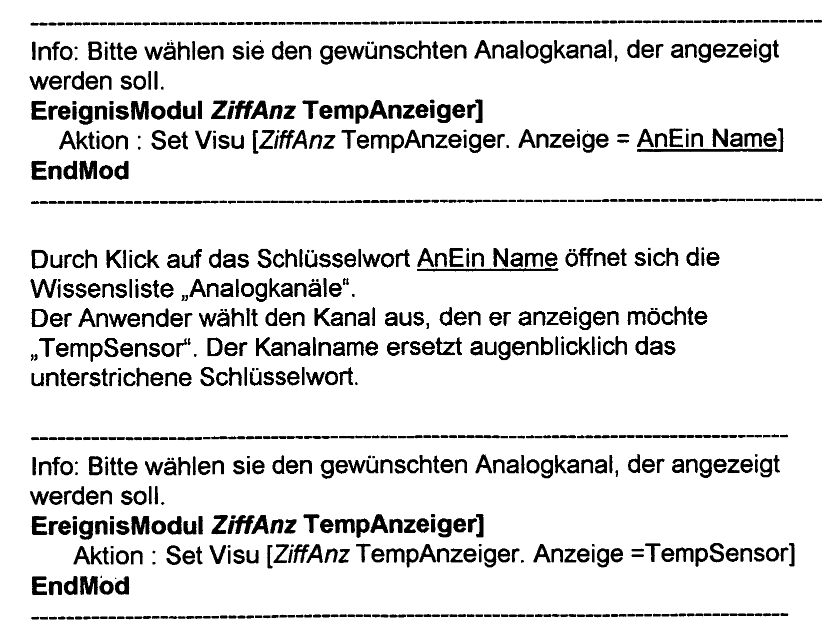

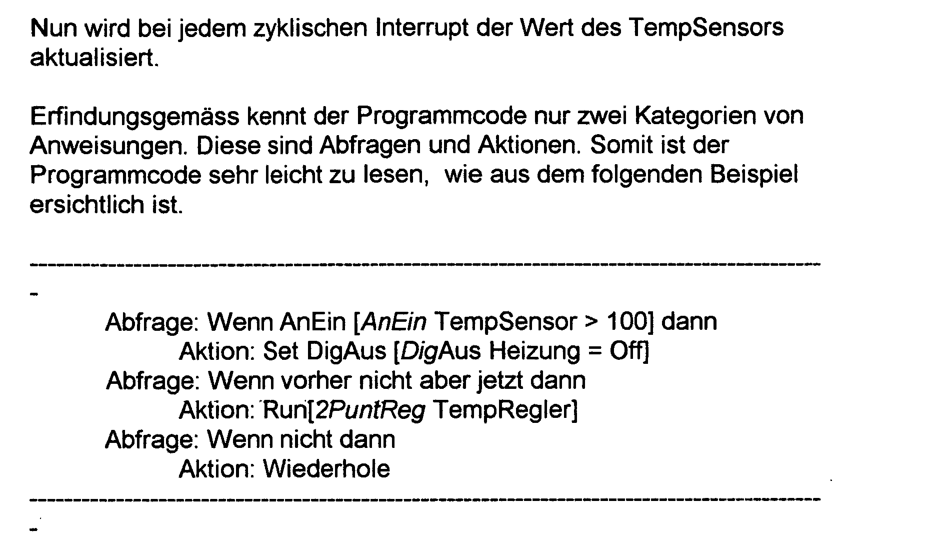

Die Funktion ist folgende: Wenn die Temperatur, gemessen mit dem TempSensor, grösser als 100°C ist wird die Heizung ausgeschaltet. Wenn die Temperatur gerade 100 °C erreicht oder überschritten hat, so wird der *2PuntReg* TempRegler aufgerufen. Es ist anzumerken, dass dies nur einmal geschieht und zwar genau zu dem Zeitpunkt der Überschreitung. Wenn die Temperatur niedriger als der Grenzwert ist, so wird die Befehlsfolge wiederholt.

Die Kategorie Abfrage enthält die Anweisung >Wenn *TYP* [logische Operation] dann< mit den Optionen >Wenn vorher nicht aber jetzt dann< und der Option >Wenn nicht dann<.
In diesem Konstrukt ist zwar der an sich bekannte Befehl >IF Then Else< enthalten. Der Konstukt entsprechend der Erfindung ist erfinderisch, da er mit der optionalen Anweisung >Wenn vorher nicht aber jetzt dann< die Möglichkeit enthält, genau den Zeitpunkt zu delektieren, an dem das Ereignis eingetreten ist. Damit erhält das >Wenn [ ] dann< Konstrukt neue Dimensionen, in dem es dem Anwender die Entwicklung seiner Anwendung weiter erleichtert.

Die bekannten Programmiersprachen sind textbasiert. Das heisst ein Anwender wird die Befehle, die er neu formuliert weitgehenst eintippen, sofern er sie nicht aus einem anderen Textbereich herauskopiert.
Diese Arbeitsgänge sind zeitaufwendig und fehlerträchtig Damit besteht die Gefahr von Syntaxfehlern. Die Erfindung geht einen ganz neuen Weg, indem der Script graphisch orientiert ist. Die einzelnen Bestandteile des Scripts wie Schlüsselworte, Anweisungen, Variable, Konstante kurz Scriptobjekte sind graphische Objekte. Diese graphischen Objekte sind teils Gegenstand der Programmskelette der einzelnen Module. Zudem können, wie zuvor beschrieben, via Schlüsselworte weitere Scriptobjekte den Wissenslisten entnommen und in den Script eingesetzt werden. Die Scriptobjekte werden zeilenorientiert angeordnet, so dass der graphische Script nicht wesentlich anders aussieht, als ein textbasierter Script. Die Vorteile sind offensichtlich, da das Handling sehr viel einfacher ist.

Es besteht weiter die Möglichkeit den textorientierten Scriptobjekten bildorientierte Symbole hinzuzufügen, wodurch die Sprache noch weiter vereinfacht werden kann.

In der Anweisung >Abfrage: Wenn AnEin [*AnEin* TempSensor > 100] dann< kommt die Konstante 100 vor. Dem Anwender muss die Möglichkeit gegeben werden ein graphisches Objekt zu kreieren, das den Wert einer Konstanten beinhaltet. Dies kann auf einfache Weise mit sogenannnten PopUp Menues realisiert werden.

Zur weiteren Erläuterung der Erfindung wird auf die Abbildungen verwiesen, in denen Ausführungsbeispiele vereinfacht dargestellt sind.

Es zeigen:
- **Abbildung 1**: ein Beispiel für die Wahl geometrischer Figuren, die die drei Kategorien Ablaufmodule, Ereignismodule, Funktionsmodule repräsentieren,
- **Abbildung 2**: ein Beispiel für die Verkettung von Steuermodulen,
- **Abbildung 3**: die Bildschirme für den Entwicklungsmodus und den Laufzeitmodus,
- **Abbildung 4**: das Visualisierungsschaubild einer Beispielanwendung,
- **Abbildung 5**: die geometrischen Figuren der Steuermodule der Beispielanwendung in noch nicht verknüpfter Anordnung,
- **Abbildung 6**: die geometrischen Figuren der Steuermodule der Beispielanwendung in verknüpfter Anordnung.
- **Abbildung 7**: ist die Automatisierungseinrichtung, mit der zu automatisierenden Anwendung, vereinfacht dargestellt.

**In Abbildung 1 ist**
mit 1 die geometrische Figur bezeichnet, die einen Ablaufmodul repräsentiert,
mit 2 die geometrische Figur, die einen Ereignismodul repräsentiert und
mit 3 die geometrische Figur, die einen Funktionsmodul repräsentiert.

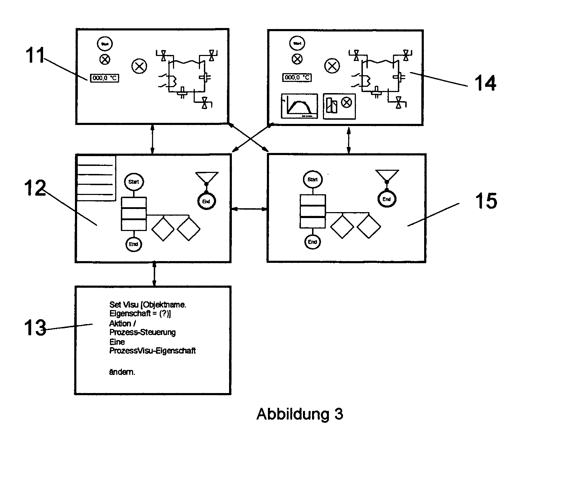

**Die Funktion entsprechend Abbildung 1 ist folgende:**
Diese geometrischen Figuren repräsentieren die Steuermodule und werden im Modulfenster 12 der Abbildung 3 als graphische Objekte dargestellt. Sie können entsprechend vorgegebener Regeln so miteinander verbunden werden, wie es dem Programmablauf entspricht. Durch Markieren und Doppelklick auf das graphische Objekt öffnet sich das Konfigurationsfenster (Abbildung 3) Nun kann der Modul konfiguriert werden.

**In Abbildung 2 ist**
mit 4 das graphische Objekt des Startmoduls dargestellt,
mit 5 das graphische Objekt eines Ablaufmoduls,
mit 6 das graphische Objekt eines Endmoduls,
mit 7 das graphische Objekt eines Funktionsmoduls,
mit 8 das graphische Objekt eines weiteren Funktionsmoduls,
mit 9 das graphische Objekt eines Ereignismoduls und
mit 10 das graphische Objekt eines weiteren Endmoduls

**Die Funktion entsprechend Abbildung 2 ist folgende:**
Wenn das Programm im Laufzeitmodus (14, Abbildung 3) gestartet wird, so übernimmt der Ablaufmodul 5 die Prozessführung. Während der Laufzeit von Modul 5 werden die Funktionsmodule 7 und 8 aufgerufen. Der Modul 7 könnte ein Funktionsmodul Typ Regler sein. Der Modul 8 könnte ein Funktionsmodul Typ Messung sein, dessen Aufgabe es ist Messdaten zu erfassen, zu visualisieren und zu speichern.Der Ereignismodul 9 und der Modul End 10 repräsentieren einen Shutdown (Sicherheitsabschaltung). Wenn der Versuch ausser Kontrolle gerät, bestimmte Grenzwerte überschritten werden, so tritt das Ereignis 9 ein. Der durch das Ereignis aufgerufene Programmende Modul 10 sorgt dafür, dass alle Funktionen abgeschaltet werden.

**In Abbildung 3 stellt**
11 den Visualisierungsbildschirm im Entwicklungsmodus,
12 das Modulfenster im Entwicklungsmodus,
13 das Konfigurationsfenster,
14 der Visualisierungsbildschirm im Laufzeitmodus und
15 das Modulfenster im Laufzeitmodus dar.

**Die Funktion entsprechend Abbildung 3 ist folgende:**
Die Bildschirme 11, 12 und 13 dienen zur Entwicklung einer Anwendung. Dieser Modus wird als Entwicklungsmodus bezeichnet.
Die drei Bildschirme stehen daher dem Anwender während der Entwicklungsphase zur Verfügung.
Die Bildschirme 14 und 15 dienen dem Anwender während der Laufzeit zur Bedienung des Prozesses. Dies geschieht durch virtuelle Objekte wie Tasten, Schalter, Texteingabefelder und ähnliches.

Visualisierungsobjekte wie Trendgraphiken, virtuelle Signalleuchten, Anzeigegeräte dienen dazu den Prozess zu beobachten. Dieser Modus wird mit Laufzeitmodus bezeichnet. Im Laufzeitmodus kann die Anwendung gestartet und gestoppt werden. Der Anwender kann zwischen dem Entwicklungsmodus und dem Laufzeitmodus hin-und herschalten.

Der Bildschirm 11 dient dazu, im Entwicklungsmodus Visualisierungsobjekte auf dem Bildschirm zu installieren und zu konfigurieren. Dies ist der erste Schritt zur Entwicklung einer Anwendung. Zum Installieren steht die Bibliothek der Visualisierungsobjekte zur Verfügung. Wenn ein Objekt ausgewählt wird, so wird es als graphisches Objekt auf dem Bildschirm 11 und 14 dargestellt. Ausgewählt ist ein Objekt, wenn ihm ein individueller Name gegeben wird. Nun können die einzelnen Objekte durch Anpassung ihrer Objekteigenschaften konfiguriert werden. Objekteigenschaften sind Grösse, Farbgebung, Beschriftung, Zustände wie Ein/Aus.

Das Modulfenster 12 dient dem Anwender während der Entwicklung zum Installieren, Anordnen und Verknüpfen von Steuermodulen. Von den einzelnen Modulobjekten kann der Anwender in das Konfigurationsfenster 13 gelangen und die einzelnen Module konfigurieren. Dies ist der zweite Schritt zur Entwicklung einer Anwendung. Durch Doppelklick auf die geometrische Figur eines Steuermoduls öffnet sich das Konfigurationsfenster 13, und es erscheinen abhängig vom gewählten Modul vorgefertigte Programmskelette. Standardfunktionen wie Regler werden via Eingabemasken konfiguriert. Bei Modulen, die durch ein Modulskelett im Konfigurationsfenster 13 repräsentiert werden, wird das Modulskelett unter Einhaltung vorgegebener Regeln zu funktionsfertigen Modulen ergänzt.

Wenn die einzelnen Module konfiguriert sind so folgt der dritte Schritt zur Entwicklung der Anwendung. Die einzelnen Module werden sinnvoll im Modulfenster 12 angeordnet und nach vorgegebenen Regeln durch Verbindungslinien graphisch miteinander verbunden, so wie es die Automatisierungsaufgabe erfordert.

**Die folgende Beschreibung mit den Abbildungen 4, 5 und 6 stellt eine Automatisierungslösung entsprechender Erfindung dar.**
Anmerkung: Bezeichnungen in Anführungsstrichen sind individuelle Namen.

**In Abbildung 4 ist dargestellt mit**
16 ein hinterlegter Digitalausgang der Mess-und Steuereinheit mit dem Namen "Ventil A", der die Zuführung des ersten flüssigen Mediums steuert,
17 ein hinterlegter Digitalausgang der Mess-und Steuereinheit mit dem Namen "Ventil B", der die Zuführung des zweiten flüssigen Mediums steuert,
18 ein hinterlegter Digitalausgang der Mess-und Steuereinheit mit dem Namen "Auslass" zum Leeren des Reaktorgefässes,
19 ein hinterlegter Analogeingang der Mess-und Steuereinheit mit dem Namen "TempSensor" zur Erfassung der Flüssigkeitstemperatur,
20 ein hinterlegter Analogeingang der Mess-und Steuereinheit mit dem Namen "TempSicherheit" zur Erfassung der Flüssigkeitstemperatur,
21 ein hinterlegter Digitalausgang der Mess-und Steuereinheit mit dem Namen "Heizung", der die Wassertemperatur aufheizt,
22 ein Visualisierungsobjekt Typ *Taste* mit dem Namen "Starttaste",
23 ein Visualisierungsobjekt Typ *SignLeuchte* mit dem Namen "BetriebEin",
24 ein Visualisierungsobjekt Typ *ZiffernAnz* mit dem Namen "Ziffernanzeiger"zur Anzeige der Flüssigkeitstemperatur,
25 ein Visualisierungsobjekt Typ *Profil* mit dem Namen "Sollwertvorgabe", Darstellung der Flüssigkeitstemperatur über der Zeit mit Soll- und Ist-Temperatur,
26 ein Visualisierungsobjekt Typ *2PRegler* (Zweipunktregler) mit dem Namen "TempRegler", Darstellung der Soll- und Ist-Temperatur der Flüssigkeit als Balken und einer virtuellen Leuchte, Heizung Ein/Aus und
27 ein Visualisierungsobjekt Typ *SignLeuchte* mit dem Namen "Störung". Der Signalleuchte "Störung" sind die Shutdownmodule hinterlegt.

**Die Funktion entsprechend Abbildung 4 ist folgende:**
Die Abbildung 4 zeigt ein Prozess-Schaubild, wie ein Anwender es sich aufbauen kann. Der Gegenstand des zu automatisierenden Prozesses ist ein Reaktorgefäss, wie es in der chemischen Industrie vielfach verwendet wird.
Die Figur, die die Details 16 bis 21 beinhaltet, ist eine schematische Darstellung des Reaktors. Ein Anwender kann ein solches Bild mit einem Zeichenprogramm erstellen und in in ein Prozess-Schaubild (Abbildung 4) einfügen. Er kann aber auch ein Foto seines Prozesses benutzen.
Die Positionen 22 bis 27 sind standardisierte Visualisierungsobjekte. Diese entnimmt er der Bibliothek für Visualisierungsobjekte, indem er sie als graphische Objekte aus einer Liste auf den Bildschirm zieht und ihnen einen individuellen Namen gibt.

Diese Visualisierungsobjekte kann er positionieren, in der Grösse verändern und mit Eigenschaften versehen. Solche Eigenschaften können Farbgebung, Schriften und vieles anderes sein. Die Eigenschaften eines Visualisierungsobjektes sind von der Art des Objektes abhängig. Den Visualisierungsobjekten sind Steuermodule hinterlegt. Diese Steuermodule erhalten automatisch den gleichen individuellen Namen wie das korrespondierende Visualisierungsobjekt. Das Programm legt automatisch eine Liste der korrespondierenden Steuermodule an. Diese Liste ist im Modulfenster 12 der Abbildung 3 für den Anwender verfügbar.

Der Ablauf der Automatisierungsaufgabe im Laufzeitmodus beginnt mit dem Drücken der Taste, "Starttaste" 22. Das Programm wartet bis diese Taste gedückt wird. Dies geschieht mit einem Doppelklick auf das Visualisierungsobjekt "Starttaste" 22. Wenn dies geschehen ist wird das Programm fortgesetzt.

Nun wird das "VentilA" 16 für 15 Sekunden und das "VentilB" 17 für 20 Sekunden durch die Digitalausgänge der Mess- und Steuereinheit, geöffnet. Die Leuchte "BetriebEin" 23 wird eingeschaltet, und es wird eine Wartezeit von 25 Sekunden eingelegt. Dadurch wird der Behälter des Reaktors mit den gewünschten flüssigen Medien gefüllt.
Nun wird der, dem Visualisierungsobjekt Typ *Profil* "Sollwertvorgabe"25 hinterlegte Funktionsmodul aufgerufen. Dieser liefert den zeitgesteuerten Sollwert für den Zweipunktregler Typ *2PRegler* mit dem Namen "TempRegler" 26.

Der Funktionsmodul Typ *Profil* "Sollwertvorgabe" 25 wird wie folgt konfiguriert: Während einer Stunde wird die Temperatur von 20° C auf 100° C aufgewärmt. Während einer weiteren Stunde wird die Temperatur auf 100° C gehalten. Während einer weiteren Stunden kühlt die Temperatur auf 20° C ab. Der Funktionsmodul "Sollwertvorgabe" 25 liefert den Sollwert für den "TempRegler" 26. Die Aufgabe des "TempRegler" 26 ist es, die Flüssigkeitstemperatur entsprechend des Sollwertes "Sollwertvorgabe" 25 zu regeln, so dass die Temperatur dem vorgesehenen zeitlichen Ablauf korrekt nachgeführt wird. Das Visualisierungsobjekt der "Sollwertvorgabe" 25 zeigt mit seinen beiden Kurven den zeitlichen Ablauf des Sollund des Istwertes. Dadurch hat ein Beobachter die Möglichkeit den korrekten Ablauf des Versuches zu kontrollieren.
Der Funktionsmodul Typ *2PRegler* "TempRegler" 26 regelt entsprechend des Sollwertes, den der Funktionsmodul Typ *Profil* "Sollwertvorgabe" 25 vorgibt die Flüssigkeitstemperatur mit Hilfe des Temperatursensors "TempSensor" 19 und des Digitalausganges der Mess-und Steuereinheit mit dem Namen "Heizung" 21.

Gleichzeitig mit dem Funktionsmodul "Sollwertvorgabe" 25 und des "TempRegler" 26 wird der Funktionsmodul Typ *Messung* mit dem Namen "Trend" aufgerufen. Dieser ist nicht als Visualisierungsobjekt in dem Schaubild Abbildung 4 dargestellt. Sein Visualisierungsobjekt befindet sich in einem weiteren nicht dargestellten Schaubild. Jedoch ist die Messkurve in dem Visualisierungsobjekt "Sollwertvorgabe" 25 eingeblendet. Aufgabe des Funktionsmoduls "Trend" ist es die Messwerte kontinuierlich während der drei Stunden zu erfassen und zu speichern, damit die Messdaten für eine spätere Auswertung verfügbar sind.
Wenn die Zeit von 3 Stunden des Funktionsmoduls "Sollwertvorgabe" 10 abgelaufen ist, ist die Temperatur der Flüssigkeit gesteuert durch den Sollwert wieder auf Umgebungstemperatur abgekühlt.

Der dem Ventil 18 hinterlegte Digitalausgang der Mess- und Steuereinheit "Auslass" öffnet nun das Ventil "Auslass" 18, so dass der Behälter des Reaktorgefässes geleert wird. Dann wird das Programm beendet.
Losgelöst von dem bisherigen Vorgang arbeitet das Visualisierungsobjekt Typ *ZiffernAnz* "Ziffernanzeiger" 24. Diesem Visualisierungsobjekt ist ein Ereignismodul hinterlegt, dessen Aufgabe es ist, zyklisch die Flüssigkeitstemperatur in dem "Ziffernanzeiger" 24 anzuzeigen.

Dem Visualisierungsobjekt Typ *SignLeuchte* "Störung" 27 ist ein Shut-down Ereignis hinterlegt. Die Funktion ist folgende:
Der Temperaturfühler "TempSicherheit" 20 ist aus Sicherheitsgründen vorgesehen. Es wird nun zyklisch geprüft, ob die Messwerte der Temperaturfühler "TempSensor" 19 und "TempSicherheit" 20 nicht mehr als 2 °C voneinander abweichen. Wird die Temperaturdifferenz grösser, so wird ein Shut-down ausgelöst. Wenn die Temperaturdifferenz grösser wird, so kann davon ausgegangen werden, dass die Temperaturmessung einer der beiden Pfade gestört ist.
Ein weiterer Shut-down wird ausgelöst, wenn die Flüssigkeitstemperatur einen Wert von 120 °C überschreitet, z.B. dadurch, dass die Regelung des "TempRegler" 26 ausser Kontrolle gerät.
Wenn das shut-down Ereignis eintritt, so wird die Störungsleuchte 27 eingeschaltet, die "Heizung" 21 ausgeschaltet und das Ventil "Auslass" 18 für ca. 50 Sekunden geöffnet, wodurch der Behälter geleert wird. Danach wird das Programm beendet.

Wenn ein Anwender das Schaubild entsprechend Abbildung 4 angelegt hat, so sind die korrespondierenden Funktions- und Ereignismodule in einer Liste, die über das Modulfenster 12 der Abbildung 3 zugänglich ist, abgelegt.
Dies sind jedoch noch nicht alle Module, die für die beschriebene Automatisierungsaufgabe benötigt werden. Es fehlen noch der (die) Ablaufmodul(e). Den Ablaufmodulen ist die Prozessführung zugeordnet. Diese Module kann ein Anwender einer Liste im Modulfenster 12 der Abbildung 3 entnehmen und als geometrische Figuren auf dem Bildschirm plazieren.

In Abbildung 5 sind die einzelnen geometrischen Figuren zu sehen, die der Anwender zuerst noch ungeordnet im Bildschirm Modulfenster 12 der Abbildung 3 angelegt hat.

**In Abbildung 5 ist dargestellt mit**
28 der Funktionsmodul Typ *Profil* mit dem Namen "Sollwertvorgabe", der den Sollwert für die Flüssigkeitstemperatur liefert,
29 der Funktionsmodul Typ *2PRegler* (Zweipunktregler) mit dem Namen "TempRegler",
30 der Funktionsmodul Messung mit dem individuellen Namen "Trend",
31 der Ereignismodul mit dem individuellen Namen "ShutdownEreignis", der den Shutdown auslöst,
32 der Ereignismodul, Typ *ZiffernAnz* mit dem Namen "Ziffernanzeiger" der die Ziffernanzeige steuert
33 der Ablaufmodul mit dem individuellen Namen "Steuerung", dem die Prozessführung obliegt
34 der Ablaufmodul mit dem individuellen Namen "Shutdown", der den Shutdown steuert,
35 der Startmodul mit dem individuellen Namen "Start",
36 der Modul End mit dem individuellen Namen "Ende", der die Automatisierungsaufgabe normal beendet und
37 der Modul End mit dem individuellen Namen "EndShutdown", der die Automatisierungsaufgäbe bei Störung beendet.

**Die Funktion entsprechend Abbildung 5 ist folgende:**
Der Anwender hat nun alle Steuermodule auf seinem Bildschirm Modulfenster 12 der Abbildung 3 installiert. Die Module liegen verstreut, die weitere Aufgabe besteht darin, diese Module anzuordnen, nach festen Regeln zu konfigurieren (programmieren) und zu verknüpfen, indem die Module mit Verbindungslinien funktionsgerecht verbunden werden.
Die einzelnen Module zeigen unterschiedliche Figuren entsprechend ihrer Zuordnung zu den Kategorien Ablaufmodule, Ereignismodule und Funktionsmodule sowie der Startmodul und die Endmodule.

In **Abbildung 6** hat der Anwender, die in Abbildung 5 ungeordneten geometrischen Figuren der Module, geordnet, mit Linien verbunden, so wie es die Automatisierungsaufgabe entsprechend des Beispieles nach Abbildung 4 erfordert.

Bezeichnet ist
mit 38 der Funktionsmodul Typ *Profil* mit dem Namen "Sollwertvorgabe", der den Sollwert für die Flüssigkeitstemperatur liefert,
mit 39 der Funktionsmodul Typ *2PRegler* (Zweipunktregler) mit dem Namen "TempRegler",
mit 40 der Funktionsmodul Messung mit dem individuellen Namen "Trend",
mit 41 der Ereignismodul mit dem individuellen Namen "ShutdownEreignis", der den Shutdown auslöst,
mit 42 der Ereignismodul, Typ *ZiffernAnz* mit dem Namen "Ziffernanzeiger" der die Ziffernanzeige steuert,
mit 43 der Ablaufmodul mit dem individuellen Namen "Steuerung", dem die Prozessführung obliegt,
mit 44 der Ablaufmodul mit dem individuellen Namen "Shutdown", der den Shutdown steuert,
mit 45 der Startmodul mit dem individuellen Namen "Start",
mit 46 der Modul End mit dem individuellen Namen "Ende", der die Automatisierungsaufgabe normal beendet, und
mit 47 der Modul End mit dem individuellen Namen "EndShutdown", der die Automatisierungsaufgabe bei Störung beendet.

Anhand des Ablaufmoduls "Steuerung" 2 der Abbildung 6, soll gezeigt werden, wie entsprechend der Erfindung ein Anwender seinen Programmablauf aufbauen kann, ohne dass er über Programmierkenntnisse verfügt. Dies wird durch Schlüsselworte ermöglicht, die den Zugang zu Wissenslisten herstellen. Aufgabe des Anwenders ist es aus der jeweiligen Wissensliste den Punkt auszuwählen, den er für die Erfüllung seiner Aufgabe benötigt.
Die Erfindung sieht vor, dass ein Ablaufmodul sich aus einzelnen Schritten (Steps) zusammensetzt, die der Reihe nach abgearbeitet werden.

Die Aufgaben, die der Ablaufmodul "Steuerung" 2, Abbildung 5 zu erledigen hat sind wie folgt aufgelistet.

### Step 1

Warten auf das Betätigen der "Starttaste" 7 der Abbildung 4.

### Step 2

Ventil "VentilA" 1 der Abbildung 4 für 15 Sekunden öffnen. (Erste Flüssigkeit einfüllen).
Ventil "VentilB" 2 der Abbildung 4 für 20 Sekunden öffnen. (Zweite Flüssigkeit einfüllen).
Leuchte "BetriebEin" 8 der Abbildung 4 einschalten.
Wartezeit von 25 Sekunden einglegen. (Behälter ist dann gefüllt).
Funktionsmodul Profil "Sollwertvorgabe" 10 der Abbildung 5 starten.
Funktionsmodul Zweipunktregler"TempRegler" 11 der Abbildung 5 starten.
Funktionsmodul Messung "Trend" 13 der Abbildung 5 starten.
Wartezeit von 3 Stunden einlegen. (Versuch ist dann beendet).

Um die Konfiguration vorzunehmen ist in Abbidung 3 das Konfigurationsfenster 3 vorgesehen. Durch Doppelklick auf den Ablaufmodul "Steuerung" 2 in Abbildung 5 gelangt man in das Konfigurationsfenster 3 der Abbildung 3. Dort wird das Programmskelett des ausgewählten Moduls "Steuerung" dargestellt.
Das Programmskelett ist eine Kopie des Bibliotheksmodul Typ *"blaufmodul*. Diese Kopie entsteht, wenn dem Ablaufmodul der Name in diesem Fall "Steuerung" vergeben wird. 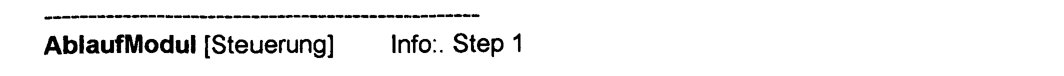 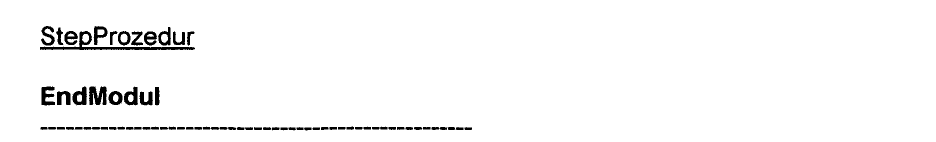 Dieser Modul beinhaltet das Schlüsselwort StepProzedur. Durch Doppelklick öffnet sich die Wissensliste StepProzedur. Diese enthält alle verfügbaren Stepprozeduren.
**Wissenliste StepProzedur**
Standardstep
Warten auf Schalterbetätigung
Warten auf Tastendruck
Warten auf TextEingabe

Da im Step 1 auf einen Tastendruck der *Taste* "StartTaste" gewartet werden soll, wird der Listenpunkt (Warten auf Tastendruck) gewählt.

Das Schlüsselwort StepProzedur wird nun ersetzt

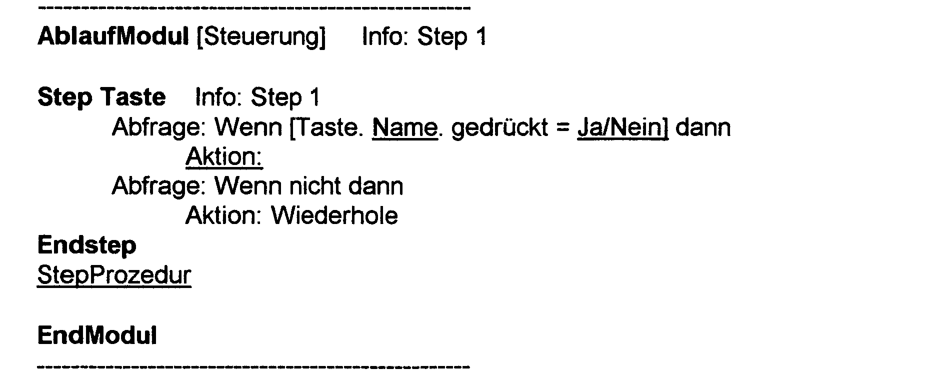

Anmerkung: Nach **Endstep** wird automatisch das Schlüsselwort StepProzedur eingefügt, um die Installation einer weiteren Stepprozedur zu erleichtern.

Das Schlüsselwort wurde ersetzt durch den **Step "Taste"**. Ein Anwender wird die Zeilen löschen, die er nicht benötigt. Eine Aktionsanweisung wird nicht benötigt, da nur auf den Tastendruck gewartet wird, danach wird im nächsten Step fortgesetzt. Die Zeile, in der Aktion steht, wird der Anwender daher löschen.

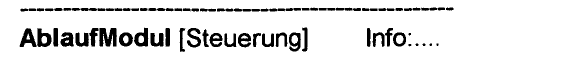

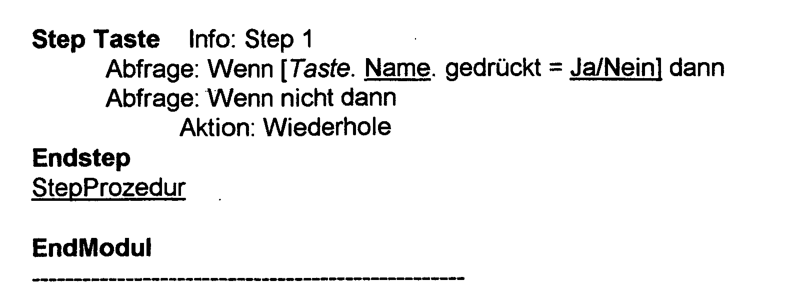

Als nächstes müssen die beiden Schlüsselworte Name und Ja/nein ersetzt werden.

Die Wissensliste für das Schlüsselwort Name enthält die individuellen Namen der Visualisierungsobjekte, die für für die vorliegende Aufgabe ausgewählt wurden (Abbildung 4).
**Wissenliste Name**
StartTaste; VentilA; VentilB; BetriebEin; Sollwertvorgabe; TempRegler; Trend; Auslass, .....
Gewählt wird StartTaste.

Die Wissenliste Ja/Nein enthält mehrere Begriffe die logisch 1 und logisch 0 repräsentieren.
**Wissenliste Ja/Nein**
logisch 1 Ja; On; High; Wahr
logisch 0 Nein; Off; Low; Falsch
Gewählt wird Ja.

Der Ablaufmodul "Steuerung" hat nun folgendes Aussehen

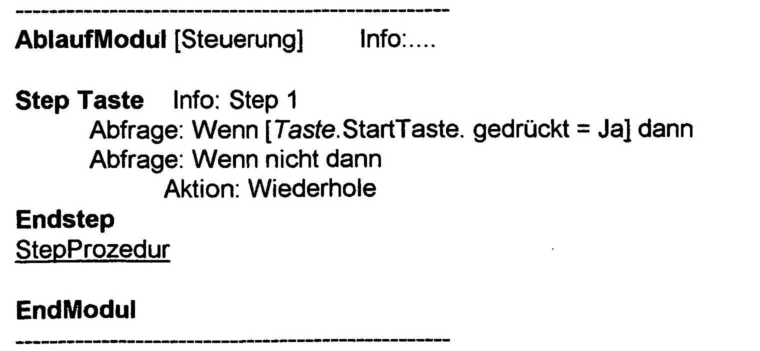

Der erste Step ist damit fertig konfiguriert. Nun muss der zweite Step, und damit letzte Step, konfiguriert werden.

In der Folge sind alle Aktionen, die im Step 2 auszuführen sind, aufgelistet.
Es fällt auf, dass keine Abfragen (Wenn[ ] dann) erforderlich sind. Die aufgelisteten Aktivitäten sind allesamt Aktionen.

### Step 2

Aktion: "VentilA" 1 der Abbildung 4 für 15 Sekunden öffnen. (Erste Flüssigkeit einfüllen).
Aktion: "VentilB" 2 der Abbildung 4 für 20 Sekunden öffnen. (Zweite Flüssigkeit einfüllen).
Aktion: Visuobjekt TYP *Leuchte* "BetriebEin" 8 der Abbildung 4 einschalten.
Aktion: Wartezeit von 25 Sekunden einglegen. (Behälter ist dann gefüllt).
Aktion: Funktionsmodul TYP *Profil* "Sollwertvorgabe" 10 der Abbildung 5 starten.
Aktion: Funktionsmodul TYP *2PuntReg* "TempRegler" 11 der Abbildung 5 starten.
Aktion: Funktionsmodul TYP *Messung* "Trend" 13 der Abbildung 6 starten.
Aktion: Wartezeit von 3 Stunden einlegen. (Versuch ist dann beendet).

Das Schlüsselwort StepProzedur muss nun ersetzt werden.
**Wissenliste StepProzedur**
StandardStep
Warten auf Schalterbetätigung
Warten auf Tastendruck
Warten auf TextEingabe

Gewählt wird der Listenpunkt StandardStep. Der StandardStep ersetzt nun das Schlüsselwort StepProzedur

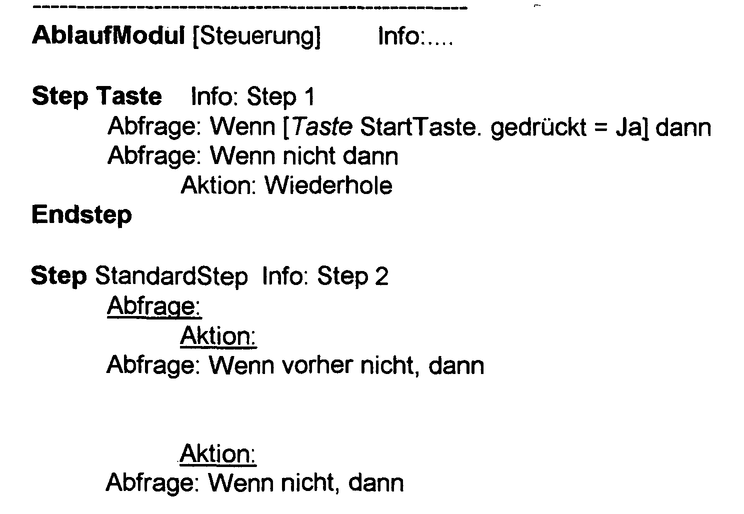

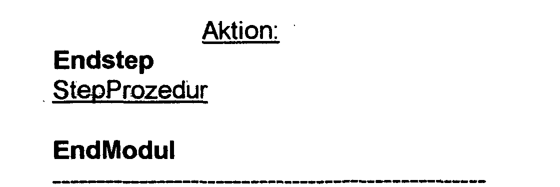

Da Abfragen nicht benötigt werden, wird der Anwender diese Zeilen löschen. Er weiss zudem, dass 8 Aktionen erforderlich sind er wird also 8 Zeilen Aktion durch Einfügen von Zeilen vorsehen.

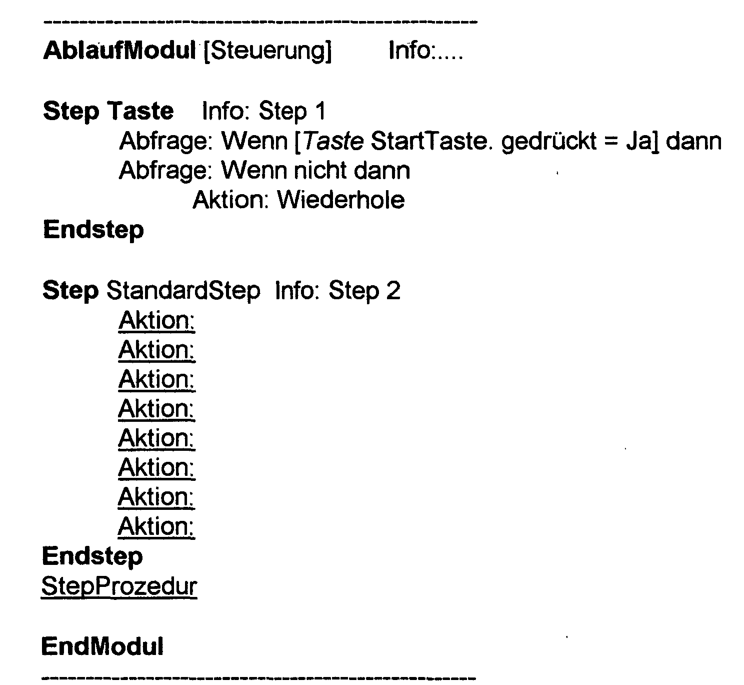

Die erste Aktion des Step 2 ist:
"VentilA" 1 der Abbildung 4 für 15 Sekunden öffnen. (Erste Flüssigkeit einfüllen). Das
"VentilA" wird durch einen Schaltausgang Typ *DigAus* "VentilA" der Mess- und Steuereinheit betätigt.

| **Wissensliste Aktion** | |
|---|---|
| SetAnAus [AnAusName = (?)] auf den Wert (?) | Setze einen Analogausgang |
| SetDigAus [DigAusName = (H/L)] High oder Low | Setze einen Digitalausgang auf |
| Set Visu [*TYP* Objektname. Eigenschaft = Parameter] Objekteigenschaft | Ändere die |
| Wiederhole oder Modul | Unbestimmte Schleife eines Steps |
| Wiederhole (?) | (?) Schleifen eines Steps oder Modul |
| Warte | Unbestimmte Wartezeit |
| Warte (?) sec. | Warte für (?) sec. |
| Run [TYP ModulName] Modul auf | ein Modul ruft einen anderen |

Gewählt wird der Listenpunkt SetDigAus [DigAusName = H/L].
Für DigAusName wird "VentilA" gewählt.

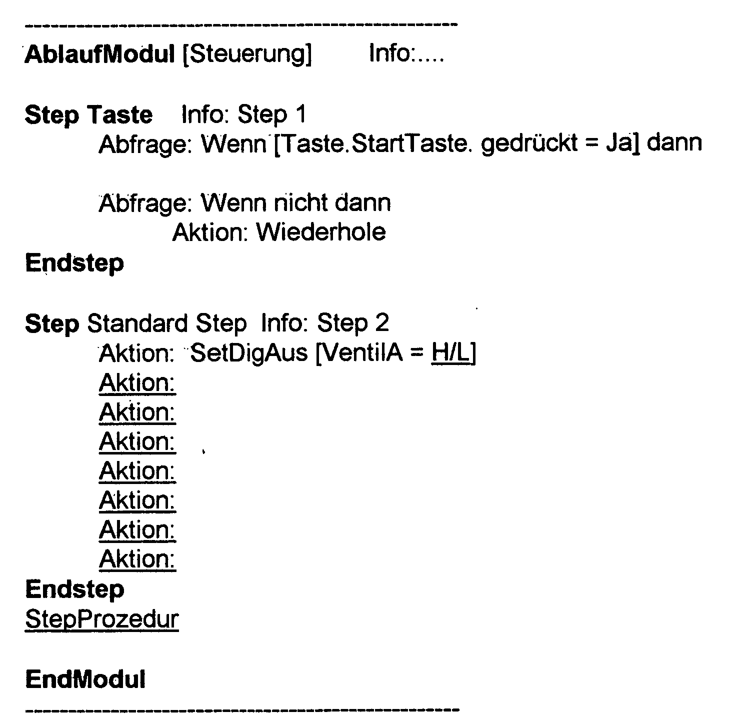

Für das Schlüsselwort H/L sind aus der Wissensliste H/L folgende Punkte verfügbar:
**Wissensliste H/L**

| Logisch 0; | Logisch 1 |
|---|---|
| 0 | 1 |
| Schliesse | Öffne |
| Aus | An |
| Off | ON |

| Low | High |
|---|---|
| Falsch | Richtig |
| Nein | Ja |
| Schliesse für (?) sec. | Öffne für (?) sec. |
| Aus für (?) sec. | An für (?) sec. |
| Off für (?) sec | ON für (?) sec. |
| Low für (?) sec. | High für (?) sec. |

Es wird der Listenpunkt Öffne für (?) sec. gewählt. Für (?) wird 15 eingesetzt.

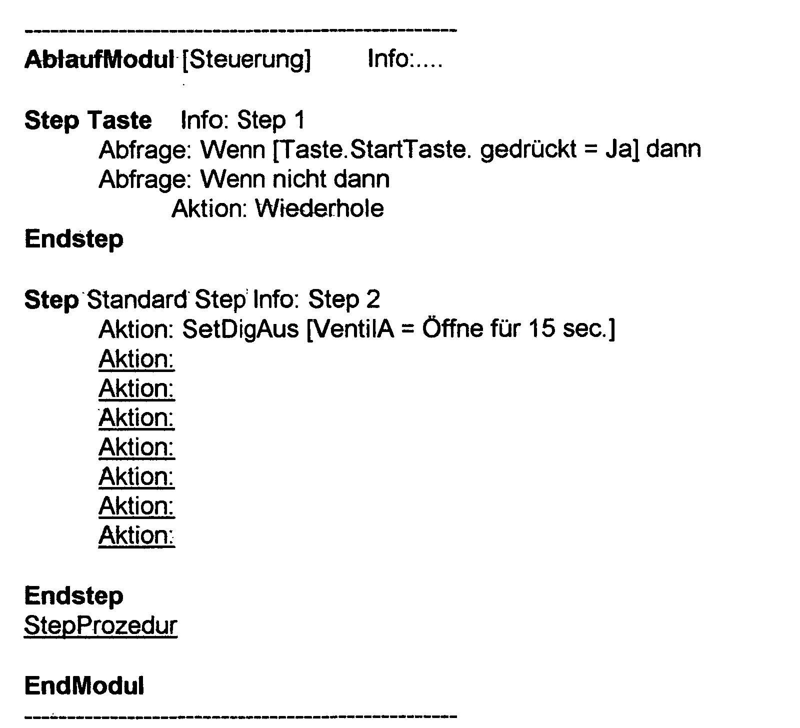

In der gleichen Weise wird mit dem Öffnen des VentilB für 20 sec. verfahren.

Alle weiteren Aktionen werden in der gleichen Weise konfiguriert, Die Aufrufe der Funktionsmodule erfolgen mit Run [*TYP* ModulName]. Aus der Wissenliste *TYP* wird der Typ des Moduls *Profil, Zweipunktregler, Messung* ausgewählt. Aus der Wissenliste Modulnamen werden die individuellen Namen der Module "Sollwertvorgabe", "TempRegler", "Trend" gewählt.
Da kein weiterer Step erforderlich ist, wird das Sdchlüsselwort StepProzedur gelöscht.

Hieraus ergibt sich das Aussehen des vollständig konfigurierten Ablaufmoduls "Steuerung":

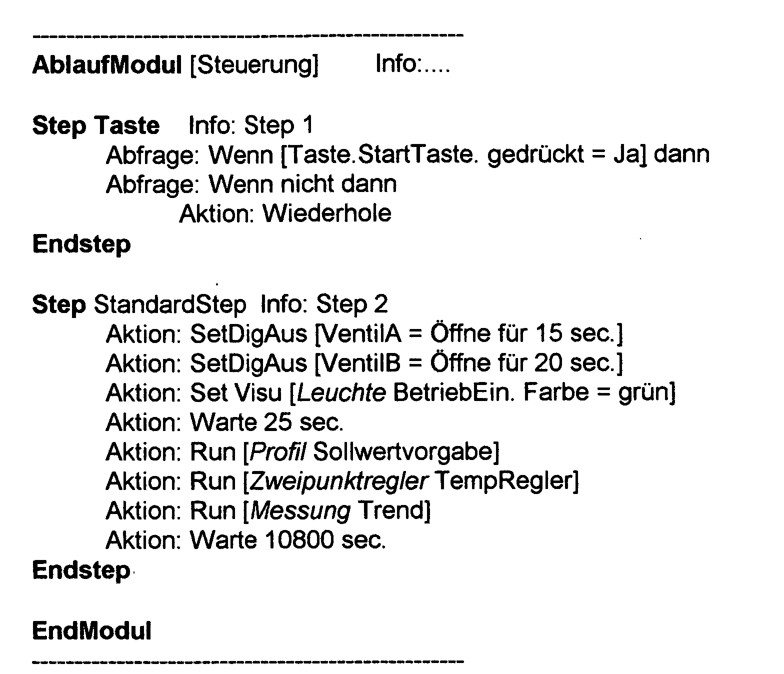

Das Beispiel lässt sich in vielfältiger Weise ausbauen und unterschiedlich gestalten, ohne dass neue Erfindungsgedanken nötig wären. Z.B. kann man Daten wie Öffnungszeiten der Ventile aus Eingabelisten entnehmen. Man könnte auf einfache Weise eine zusätzliche StopTaste vorsehen. Damit könnte man den Versuch zu jeder Zeit manuell beenden.

**In Abbildung 7 ist**
mit 48 eine beliebige zu automatisierende Anwendung sinnbildlich dargestellt,
mit 49 die Mess- und Steuereinheit, die das Bindeglied zwischen Anwendung und Datenverarbeitung herstellt,
mit 50 ein Datenverarbeitungsgerät, in dem das Automatisierungsprogramm abläuft,
mit 51 die Kabelverbindungen zu den Sensoren und Aktoren der Anwendung und
mit 52 die Datenverbindung zwischen der Mess- und Steuereinheit und dem Datenverarbeitungsgerät.

**Die Funktion entsprechend Abbildung 7 ist folgende:**
Die in 48 schematisch dargestellte Anwendung kann ein beliebiger Versuchsaufbau in der Forschung oder Entwicklung sein. Es könnte sich um einen Kochprozess in bei der Herstellung von Lebensmittel handeln. Es könnte ein Prüfständ zum Prüfen von Motoren sein.
Die Aufgabe, der in 49 dargestellten Mess- und Steuereinheit besteht darin, einerseits die Signale verschiedener Sensoren zu erfassen und in physikalischen Grössen wie Temperaturen, Drücke, Durchflüsse, Drehzahlen, Geschwindigkeiten um zu formen. Ferner können Schaltzustände erfasst werden z. B. ob ein Aggregat ein- oder ausgeschaltet ist, ob Ventile geöffnet oder geschlossen sind und vieles mehr. Über Schalt- und Analogausgänge der Mess- un Steuereinheit 49 kann der, der Anwendung zu Grunde liegende Prozess, in der gewünschten Weise gesteuert werden. Über standardisierte Datenschnittstellen können ferner Mess- und Ausgabegeräte wie Waagen, Grossanzeigen in den Automatisierungsprozess eingebunden werden. Bei einfachen Anwendungen kann die Mess- und Steuereinheit 49 auch als Einsteckkarten im Datenverarbeitungsgerät 50 ausgeführt sein.
Das Datenverarbeitungsgerät 50 dient als Mensch/Maschine Schnittstelle und beherbergt die Steuerungssoftware. Die schematisch dargestellten Kabelverbindungen 51 stellen die Verbindungen zwischen den Sensoren und Aktoren des Prozesses her. Die Datenverbindung 52 ist eine standardisierte Schnittstelle z. B. Ethernet wodurch sich die Mess- und Steuereinheit 49 und das Datenverarbeitungsgerät 50 in grössere Datennetze einbinden lassen.

## Patentansprüche

1. System zur Automatisierung technischer Prozesse und/oder Versuche **gekennzeichnet durch** eine Mess- und eine Steuereinheit (49), die mittels Mess- und Steuerleitungen (51) mit Sensoren und Aktoren des Prozesses (48) oder der Versuchseinheit in Verbindung stehen, **durch** zumindest eine Bibliothek, die Visualisierungsobjekte (22 bis 27)und Steuermodule enthält, und **durch** das System beherrschende Software.

2. System zur Automatisierung technischer Prozesse und/oder Versuche nach Anspruch 1 **dadurch gekennzeichnet, dass** in ihrer Funktion vordefinierte Steuermodule mit Visualisierungsobjekten (22 bis 27) verknüpft sind, die gemeinsam zur Lösung von Teilaufgaben beitragen, und dass bei Wahl eines Visualisierungsobjektes der verknüpfte Steuermodul in einem Modulfenster (12) angelegt wird.

3. System zur Automatisierung technischer Prozesse und/oder Versuche nach einem der Ansprüche 1 oder 2 **dadurch gekennzeichnet, dass** die Eigenschaften der Visualisierungsobjekte (22 bis 27) durch Steuermodule veränderbar sind und dass Steuermodule Bedienerhandlungen in den Ablauf der Automatisierung einbeziehen.

4. System zur Automatisierung technischer Prozesse und/oder Versuche nach einem der Ansprüche 1 bis 3 **dadurch gekennzeichnet, dass** weitere nicht mit Visualisierungsobjekten verknüpfte Steuermodule aus der Bibliothek der Steuermodule auswählbar sind.

5. System zur Automatisierung technischer Prozesse und/oder Versuche nach einem der vorhergehenden Ansprüche **dadurch gekennzeichnet, dass** die Steuermodule den Kategorien Abläufe, Ereignisse und Funktionen zugeordnet sind, woraus die Typen Ablaufmodule (1), Ereignismodule (2) und Funktionsmodule (3) hergeleitet werden.

6. System zur Automatisierung technischer Prozesse und/oder Versuche nach einem der vorhergehenden Ansprüche **dadurch gekennzeichnet, dass** die Steuermodule die Teile symbolische Figuren und hinterlegte Scripte enthalten.

7. System zur Automatisierung technischer Prozesse und/oder Versuche nach einem der vorhergehenden Ansprüche **dadurch gekennzeichnet, dass** die Ablaufmodule (1, 5, 43, 44) die Prozessführung kontrollieren, dass Ereignismodule (2, 9, 41, 42) andere Steuermodule zu beliebigen Zeitpunkten unterbrechen und während der Unterbrechung die Prozessführung übernehmen und dass Funktionsmodule (3, 7, 8, 38, 39, 40) Standardfunktionen beinhalten wie Regelung, Messung und dergleichen.

8. System zur Automatisierung technischer Prozesse und/oder Versuche nach einem der vorhergehenden Ansprüche **dadurch gekennzeichnet, dass** den verschiedenen Typen von Steuermodulen unterschiedliche symbolische Figuren als Erkennungsmerkmale zugeordnet sind.

9. System zur Automatisierung technischer Prozesse und/oder Versuche nach einem der vorhergehenden Ansprüche **dadurch gekennzeichnet, dass** die symbolischen Figuren in einem graphischen Bildschirm (Modulfenster 12, 15) angeordnet und nach festen Regeln vertikal und horizontal verkettbar sind.

10. System zur Automatisierung technischer Prozesse und/oder Versuche nach einem der vorhergehenden Ansprüche **dadurch gekennzeichnet, dass** Ablaufmodule (5, 43, 44) und Ereignismodule (9, 41, 42) vertikal verkettbar sind und für die Prozessführung verantwortlich sind und dass Funktionsmodule (7, 8, 38, 39, 40) horizontal verkettbar sind und parallel zu vertikal verketteten Modulen ohne Übernahme einer Prozessführung arbeiten.

11. System zur Automatisierung technischer Prozesse und/oder Versuche nach einem der vorhergehenden Ansprüche **dadurch gekennzeichnet, dass** Module (5, 7, 8) von anderen Modulen (5, 9, 41) entsprechend der Verkettung, während der Laufzeit aufrufbar sind.

12. System zur Automatisierung technischer Prozesse und/oder Versuche nach einem der vorhergehenden Ansprüche **dadurch gekennzeichnet, dass** Ereignismodule (42) durch einen zyklischen Interrupt aufrufbar sind und Ablaufmodule (43, 44), Funktionsmodule (38,39 ,40) und andere Ereignismodule unterbrechen, wobei nach Abarbeitung des Ereignisses die unterbrochenen Modultätigkeiten fortgesetzt werden.

13. System zur Automatisierung technischer Prozesse und/oder Versuche nach einem der vorhergehenden Ansprüche **dadurch gekennzeichnet, dass** sich der Prozessablauf in der Anordnung der Module (Abbildungen 2 und 6) manifestiert und dass, wenn die Verkettung der Ablaufmodule vertikal vorgenommen wird, der Prozessfortschritt während der Laufzeit vertikal verläuft, vorzugsweise von oben nach unten.

14. System zur Automatisierung technischer Prozesse und/oder Versuche nach einem der vorhergehenden Ansprüche **dadurch gekennzeichnet, dass** die Richtung der Anordnung (horizontal, vertikal) ohne Änderung der Funktion austauschbar ist.

15. System zur Automatisierung technischer Prozesse und/oder Versuche nach einem der vorhergehenden Ansprüche **dadurch gekennzeichnet, dass** die Steuermodule Programmanweisungen und deutlich hervorgehobene Schlüsselworte enthalten (siehe Ausführungsbeispiel ohne Abbildungen).

16. System zur Automatisierung technischer Prozesse und/oder Versuche nach einem der vorhergehenden Ansprüche **dadurch gekennzeichnet, dass** die Schlüsselworte als Platzhalter für Programmanweisungen, Variable und weitere Schlüsselworte fungieren.

17. System zur Automatisierung technischer Prozesse und/oder Versuche nach einem der vorhergehenden Ansprüche **dadurch gekennzeichnet, dass** durch hervorgehobene Schlüsselworte der Zugang zu Wissenslisten eröffnet wird, die Programmanweisungen, Variable und weitere Schlüsselworte enthalten.

18. System zur Automatisierung technischer Prozesse und/oder Versuche nach einem der vorhergehenden Ansprüche **dadurch gekennzeichnet, dass** die ausgewählten Programmanweisungen, Variable und oder Schlüsselworte das ursprüngliche Schlüsselwort automatisch ersetzen.

19. System zur Automatisierung technischer Prozesse und/oder Versuche nach einem der vorhergehenden Ansprüche **dadurch gekennzeichnet, dass** der Vorgang des Ersetzens von Schlüsselworten solange fortgesetzt wird, bis alle Schlüsselworte durch Programmanweisungen Variable oder Konstante ersetzt worden sind.

20. System zur Automatisierung technischer Prozesse und/oder Versuche nach einem der vorhergehenden Ansprüche **dadurch gekennzeichnet, dass** die Programmanweisungen der Steuermodule den Kategorien Abfragen und Aktionen angehören.

21. System zur Automatisierung technischer Prozesse und/oder Versuche nach einem der vorhergehenden Ansprüche **dadurch gekennzeichnet, dass** die Kategorie Abfragen die Anweisung mit der sinngemässen Formulierung >Wenn (logische Operation) dann< mit den Optionen >Wenn vorher nicht aber jetzt dann< und >Wenn nicht dann< enthält, wodurch unter anderem genau der Zeitpunkt des Eintrittes des Ereignisses detektiert werden kann.

22. System zur Automatisierung technischer Prozesse und/oder Versuche nach einem der vorhergehenden Ansprüche **dadurch gekennzeichnet, dass** die einzelnen Begriffe der Scriptsprache wie Schlüsselworte, Anweisungen, Variable und Konstante als graphische Objekte ausgeführt werden.

23. System zur Automatisierung technischer Prozesse und/oder Versuche nach einem der vorhergehenden Ansprüche **dadurch gekennzeichnet, dass** die Scriptobjekte zeilenorientiert angeordnet werden.

24. System zur Automatisierung technischer Prozesse und/oder Versuche nach einem der vorhergehenden Ansprüche **dadurch gekennzeichnet, dass** bildorientierte Symbole zu kreierbar sind, die in den Script eingefügt werden.
